# EUROPEAN PATENT SPECIFICATION

(11) **EP 0 832 962 B1**
(45) Date of publication and mention of the grant of the patent: **05.01.2005**
(21) Application number: 97307661.5
(22) Date of filing: 29.09.1997
(51) Int. Cl.: C10M 175/00, C10B 55/04, C10G 9/28, A62D 3/00, C10B 1/10, C10B 47/30, B01J 19/28

(54) **Thermal apparatus and process for removing contaminants from oil**
Thermisches Gerät und Verfahren zum Entfernen von Verunreinigungen aus Öl
Appareil thermique et procédé pour éliminer des matières polluantes de l'huile

(30) Priority: 27.09.1996 CA 2186658
(43) Date of publication of application: 01.04.1998
(60) Divisional application: 00203474.2
(73) Proprietor: ALBERTA OIL SANDS TECHNOLOGY AND RESEARCH AUTHORITY, Calgary, Alberta T2P 3W2 (CA)
(72) Inventor: Taciuk, William, Calgary, Alberta (CA); Odut, Steve, Calgary, Alberta (CA); Taciuk, Gordon, Calgary, Alberta (CA); Wheeler, Charlie, Calgary, Alberta (CA)
(74) Representative: Robinson, Ian Michael

(56) References cited:
- EP-A- 0 028 666
- DE-A- 3 741 623
- DE-C- 699 707
- US-A- 4 473 464
- US-A- 5 271 808
- PATENT ABSTRACTS OF JAPAN vol. 014, no. 470 (C-0769), 15 October 1990 (1990-10-15) & JP 02 194097 A (MASANORI IWASE), 31 July 1990 (1990-07-31)

## Description

### Field of the Invention

The invention relates to an apparatus for removing contaminants from used oil, the apparatus being arranged to subject the oil to vaporization and pyrolysis, whereby coke is formed. The contaminants remain with the coke, which can be separated from the oil. The apparatus comprises a rotating, indirectly heated retort or reactor in which the process is practised.

### Background of the Invention

Processes are known for reclaiming oil from contaminated used oil (sometimes referred to as waste oil).

One such process is disclosed in U.S. Patent 5,271,808, issued December 21, 1993 to Shurtleff. Shurtleff discloses a process wherein an inclined boiler heats the waste oil, vaporizing and driving off lighter hydrocarbons at temperatures of about 343°C (650°F). Heavier hydrocarbons and contaminants, amounting to about 10 % of the original oil, collect as a sludge in the bottom of the boiler. The sludge drains for disposal. The lighter hydrocarbons are condensed as a reclaimed oil product.

However, Shurtleff's process produces an oily waste which itself requires specialized disposal.

Other methods which can produce a reclaimed oil and an oil-dry contaminant typically involve subjecting the waste oil to thermal pyrolysis.

For example, in U.S. Patent 5,423,891, issued to Taylor, a process is disclosed for the gasification of solids waste. Heat carrier solids (HCS) are first heated and then fed co-currently with hydrocarbon-bearing solids waste through a rotary kiln retort. The solids waste and HCS co-mingle, transferring heat. The resulting temperatures of 649 to 816°C (1200 to 1500°F) are suitable to thermally pyrolyze the hydrocarbons in the waste. The resultant vapours are extracted for condensation. The retort solids and HCS are discharged from the kiln for recovery of the retort solids and re-heating of the HCS.

In Taylor's system the HCS are continuously circulated in a material handling loop. The HCS is a coarse granular solid which is heated outside the kiln and gives up its heat inside the kiln. Transport of the HCS around the loop involves considerable materials-handling equipment.

In U.S. Patent 4,473,464, issued to Boyer et al., a process is disclosed for treating heavy crude oil. Carbonaceous solids are finely ground for concurrent feed with crude oil to an indirectly heated kiln. Pyrolyzed hydrocarbon vapours are condensed. Coke and carbonaceous solids are screened, ground and recycled outside the kiln. Heat loss to the solids is minimized and the crude oil is preheated to a temperature high enough to balance any temperature loss by the solids.

U.S. Patent 4,303,477 issued to Schmidt et al., discloses co-currently adding a consumable fine-grained reactive solid to a waste material for binding metal and sulfur contaminants during treatment. The reactive solids, such as lime having a grain size typically less than 1mm, and waste are thermally cracked as they progress through a rotating, indirectly fired kiln. The solids make a single pass through the kiln, the reactive solid being consumed in the process.

DE 699707C discloses a rotary kiln for converting oily and bituminous residues obtained from the pressure hydrogenation of coals, tars, mineral oils and the like or from the extraction of solid carbon-containing substances, especially coal. The kiln has a cylindrical shape and comprises an outer housing, a charge of filler bodies, means for heating, means for continuously feeding material into the kiln, means through which oil vapours and gases are removed and means for removing coal dust.

However, the means for removing coal dust comprises an end chamber into which material is discharged and shovels which pick up the coal dust to be removed via a chute. DE 699707C further requires that the kiln be partitioned into chambers, the material progressively moving along the kiln, though the successive chambers. In addition, steam is introduced into the kiln and passed in countercurrent over the material.

Some of the above described prior art processes involve significant material handling challenges in the recycling and conveyancing of large masses of hot, coarse solids. Other processes, which do not recycle hot solids, involve rejection of a portion of the oily waste or irreversibly consume a catalyst.

There is therefore a need for a simplified process for separating contaminants from used oils. It is the objective of the present invention to provide such a process.

### Summary of the Invention

The present invention provides a simple apparatus for carrying out a process for reclaiming oil from used, contaminated oil feed. In general, the process comprises feeding used oil through a feed line to a rotating thermal reactor vessel wherein the oil is pyrolyzed to produce hydrocarbon vapour and coke. The contaminants become associated with the coke. The vapour and coked solids are separately removed from the vessel. The vapour is condensed to produce a substantially contaminant-free oil product and the contaminant-rich coked solids are collected for disposal, possibly as feed for a cement kiln.

The equipment used includes a reactor comprising a rotating vessel housed in a heating chamber, means for feeding used oil into the rotating vessel, and an oil recovery system comprising a vapour extraction pipe, a solids removal cyclone, and vapour condensation equipment.

More particularly, the rotating vessel comprises a cylindrical side wall and end walls forming a single internal reaction chamber. Structural cylinders extend from the end walls along the vessel's longitudinal axis. The diameter of the end cylinders is small relative to that of the cylindrical side wall. An external housing surrounds the vessel and combines therewith to form an annular heating chamber. The external housing is sealed to the end cylinders by rotary seals. A burner extends into the heating chamber. The rotating vessel is externally heated so that its internal surfaces are sufficiently hot to vaporize and pyrolyze the feed oil. The feed oil is introduced into the reaction chamber wherein it vaporizes and pyrolyzes, forming hydrocarbon vapour and coke. Metals and other contaminants become associated with the coke. A bed of non-ablating, granular, coarse solids is provided within the reaction chamber. As the vessel rotates, the coarse solids scour the vessel's internal surface and comminute the coke into fine solids. The fine solids may include solids introduced with the feed oil. The vapour is extracted from the reaction chamber through an axial pipe extending through an end cylinder. The fine solids are separated within the reaction chamber from the coarse granular solids for removal from the vessel, preferably using a spiral chute. The chute spirals from a screened entrance at the vessel's circumference to a discharge outlet at the vessel's axis. The chute's screen excludes coarse solids and collects only the fine solids. The fine solids are conveyed out of the vessel through an end cylinder, for disposal. Fine solids may also be elutriated with the vapours. Any fine solids associated with the vapours are separated out by processing in means, such as a cyclone. The substantially solids-free vapours are then condensed to yield product oil. The contaminant-rich fine solids are collected for disposal.

Only a small portion of the feed oil is converted to coke, the remainder being recovered as a substantially contaminant-free product oil.

### Brief Description of the Drawings

Figure 1 is a schematic flow diagram of a contaminated oil thermal treatment reactor, heating chamber and hydrocarbon vapour condensation system according to one embodiment of the present invention;
Figure 2 is a cross-section of the heating chamber, reactor, rotary drive and support equipment according to the present invention;
Figure 3 is a cross-sectional view of the reactor vessel along line III-III of Figure 2, showing in particular the fine solids removal chute; and
Figure 4 is a partial cross-sectional view of the second end of the reactor vessel, featuring the fine solids removal chute and screw conveyor.

### Description of the Preferred Embodiment

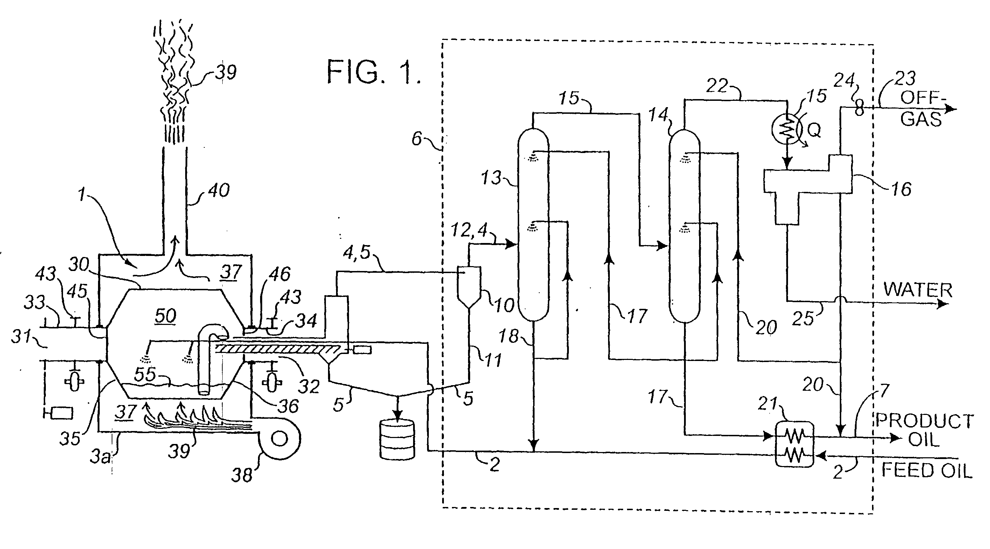

Having reference to Figure 1, the process carried out in the apparatus is described in overview. A reactor 1 is provided for thermally treating used contaminated oil 2. The reactor 1 comprises a rotatable vessel 30 housed within a heating chamber 3 formed by a housing 3a. Heat is generated in the heating chamber 3 to heat the vessel 30. The vessel 30 forms a reaction chamber 50. Feed oil 2, contaminated with metals and one or both of water and solids, is fed to the reaction chamber 50 for the separation of the contaminant from the oil component. Within the reaction chamber 50: the feed oil is vaporized and pyrolyzed, producing a hydrocarbon vapour stream 4, which may contain steam; coke 5 is formed as a byproduct; metals and solid contaminants become associated with the coke 5; and the coke 5 is separated from the hydrocarbon vapours 4. The hydrocarbon vapours 4 leave the reaction chamber 50 and are conveyed to a vapour condensation system 6. Here the hydrocarbon vapours 4 are condensed as a substantially contaminant-free product oil 7, which is suitable to provide refinery feedstock. The coke 5 is removed from the reaction chamber 50 and is stockpiled or used as fuel.

In more detail, the vapour condensation system 6 comprises a cyclone 10 for stripping fine solids 11, including coke, from the hot vapours 4. The stripped solids 11 are discharged for disposal. The stripped vapour 12 proceeds through a vapour scrubber tower ("scrubber") 13, a quench tower ("quencher") 14, a heat exchanger 15 and on into an overhead drum 16. In the scrubber 13, light oil reflux 17 from the quencher 14 and re-circulated scrubber oil 18 cause a heavy fraction of the hydrocarbon stripped vapour 12 to condense (forming the scrubber oil 18), capturing any solids not removed by the cyclone 10. The heavy scrubber oil 18 is recycled to the reactor 1 by co-mingling it with the feed oil 2 before treatment. Un-condensed vapour 19 from the scrubber 13 is directed to the quencher 14 where light condensed oil 20 from the overhead drum 16 and recycled quencher oil 17 are refluxed for condensation of the majority of the vapour 19. The quencher oil 17 is passed through a heat exchanger 21 for preheating the feed oil 2. Un-condensed vapour 22 from the quencher 14 is directed to the overhead drum 16 for the separation of water from the lightest fraction of the condensed oil 20 and from non-condensible off-gases 23. An off-gas compressor 24 provides the impetus necessary to draw vapour 4 from the reaction chamber 50 of the reactor 1. Any separated water is discharged as a water product 25. The overhead drum oil 20 and quencher oil 17 are combined to form the product oil 7.

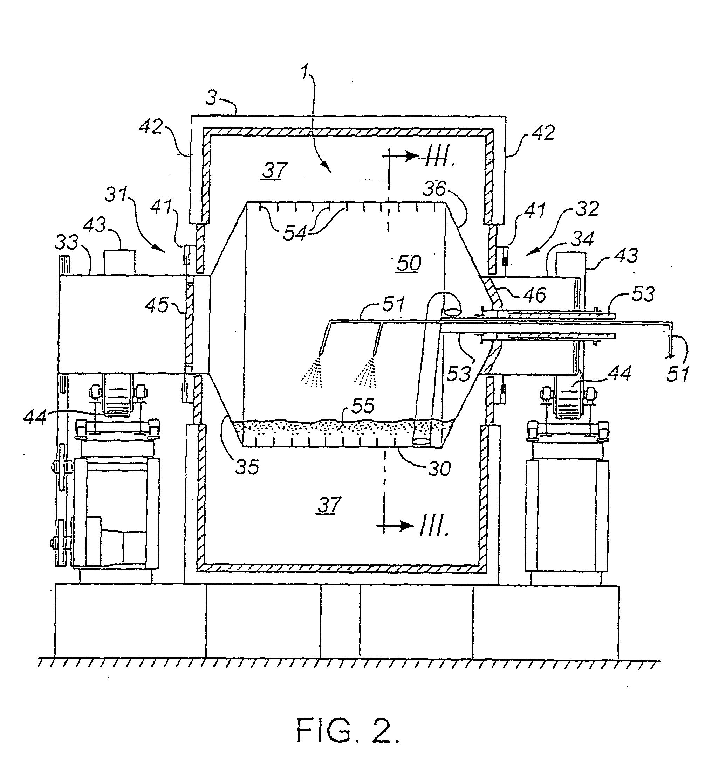

More specifically, and having reference to Figures 2 through 4, the reactor 1 comprises a rotatable vessel 30 having a first end 31 and a second end 32. The vessel 30 comprises a cylindrical side wall connected by conical transition end walls 35, 36 with first and second end cylinders 33, 34 extending along the longitudinal axis of the vessel.

The vessel 30 is rotatably supported within the heating chamber 3. An annular space 37 or heating chamber is formed between the external housing 3a and the vessel 30.

Turning briefly back to the schematic shown in Figure 1, burner 38 discharges heated combustion gas 39 for circulation through the annular space 37. A flue stack 40 at the top of the chamber 3 exhausts combustion gases 39.

The first and second end cylinders 33, 34 extend through rotary seals 41 formed in the side walls 42 of the external housing 3a. Riding rings 43 are mounted circumferentially to the cylinders 33, 34, positioned outside of the chamber housing side walls 42. The riding rings and vessel are supported on rollers 44.

The reaction chamber 50 of the rotatable vessel 30 is sealed at its first and second ends 31, 32 by first and second panels 45, 46 respectively. An axially positioned vapour pipe 53 extends through the second panel 46. The vapour pipe 53 connects the reaction chamber 50 and the condensation system 6. A feed oil line 51 extends through the vapour pipe 53 and second end panel 46. The line 51 distributes and discharges feed oil 2 in the reaction chamber 50.

The vessel 30 contains internal heat transfer enhancing surfaces in the form of radially and inwardly extending rings or fins 54.

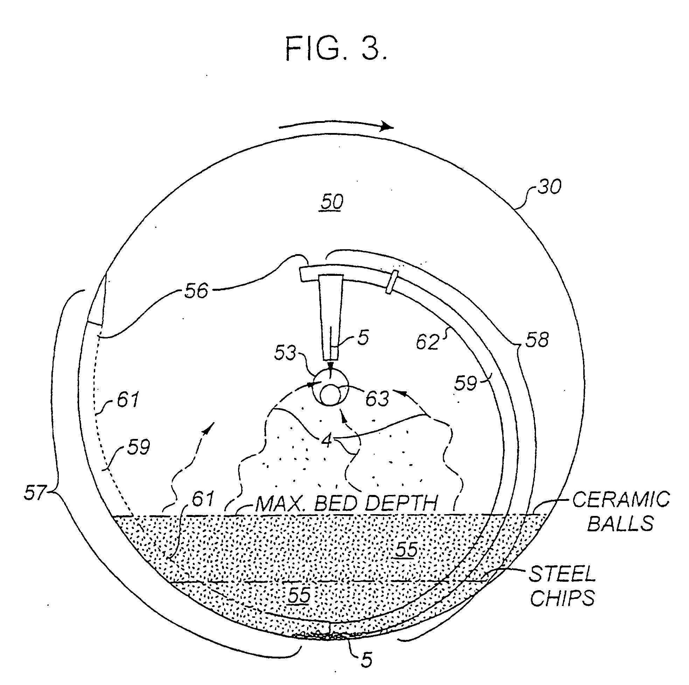

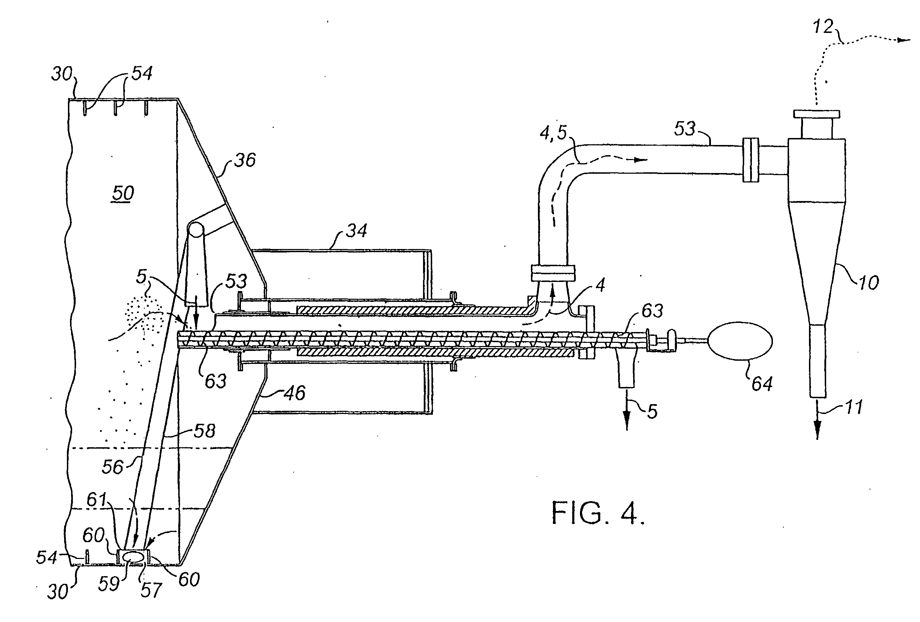

Having reference now to Figures 3 and 4, the reaction chamber 50 is charged with non-ablating, granular coarse solids which are permanently resident within the vessel 30. The coarse solids form a bed 55 in the bottom of the vessel reaction chamber 50.

At the second end of the vessel 30 is a chute 56 for fines removal. The chute 56 has a circumferentially extending first portion 57 connected to a spiral second portion 58. The chute 56 forms a passageway 59 for the transport of fine solids to the vapour pipe 53. The chute extends opposite to the direction of rotation, from the first portion 57 to the second portion 58. Thus fine solids enter the first portion 57 of the chute 56 and advance through the second portion 58 as the vessel 30 rotates.

The chute's first portion 57 lies against the inside circumference of the vessel 30 and extends circumferentially for about 120°. The chute's first portion 57 comprises side walls 60 conveniently formed by adjacent fins 54, and a bottom formed by the wall of the vessel 30 at its outer radius. The inner radius or top of the first portion 57 is fitted with a screen 61. The screens openings 61 are small enough to exclude the coarse granular solids yet permit passage of finer solids.

The chute's second portion 58 is connected to the end of the first portion 57 and comprises a spiral pipe 62 which spirals inwardly from the vessel's circumference towards the vessel's centerline. The spiral pipe 62 rotates through about 180° to direct fine solids into the end of the vapour pipe 53. A screw conveyor 63 lies along the bottom of the vapour pipe 53 and extends therethrough to a point outside the heating chamber 3. A drive 64 rotates the screw conveyor 63.

From the foregoing, it will be understood that there is provided a pyrolyzing apparatus comprising:
● a rotatable vessel 30 comprising a cylindrical side wall and end walls 35, 36, together forming a single internal reaction chamber 50;
● the vessel is connected at its ends with first and second end cylinders 33, 34 which extend along the longitudinal axis of the vessel - these end cylinders have a smaller diameter than the side wall;
● an outer housing 3a surrounds the vessel and combines therewith to form an annular space or heating chamber 37;
● a burner 38 is connected with the heating chamber and functions to provide heat in the reaction chamber by conduction through the vessel wall and the bed 55 of coarse solids, in sufficient amount so that contaminated oil in the reaction chamber will vaporize and pyrolyze to form hydrocarbon vapors and coke, with the result that contaminants concentrate in the coke;
● a flue stack 40 vents hot combustion gas 39 from the heating chamber;
● the vessel end cylinders protrude out through the wall of the outer housing;
● the outer housing has rotary seals 41 which seal around the rotating end cylinders, so that the vessel is sealed at its smallest diameter;
● the vessel is rotated by means (such as the riding rings 43, support rollers 44 and drive assembly associated with the end cylinders, so that the bed coarse solids comminutes the coke to form fine particles;
● the vessel contains a bed 55 of non-ablating, granular, coarse solids (such as metal chips) within the reaction chamber - these solids function to scour and comminute coke from the vessel wall and help to provide a thermal load to pyrolyse the oil;
● means (such as the line 51) are provided for feeding contaminated used oil into the reaction chamber;
● first means (such as the axially positioned vapour pipe and screw conveyor 63) are provided for removing fine solids (the coke particles) from the vessel through the end cylinder 34;
● second means (such as the screened chute 56) are provided for separating fine solids (the coke particles) from the coarse solids (the metal chips) adjacent the vessel side wall and conveying the separated fine solids to the first means for removal from the vessel as a separate solids stream;
● third means (such as the axially positioned vapour pipe 53) are provided for removing hydrocarbon vapours from the reaction chamber through the end cylinder 34 as a separate vapour stream containing some fine coke particles; and
● fourth means comprising a vapour condensation system 6 connected to the third means, are provided for separating residual fine solids from the vapour stream and condensing hydrocarbons from the vapour stream.

Referring again to Figure 1, in operation, the vessel 30 is rotated on its axis. Radiant and conductive heat from the burner's combustion gases 39 heat the annular space 37 and the walls of the vessel 30. The rotary seals 41 are cooled with a flow of combustion air (not shown).

Heat is directly transferred by conduction through the walls of the rotating vessel 30 to the reaction chamber 50. Heat is transferred from the vessel's walls and fins 54 to the granular solids to maintain their temperature at about 427-704°C (800-1300°F), which is sufficiently high so that feed oil is vaporized and pyrolized. Typically, the corresponding range of heating chamber temperatures required is about 552-788°C (1025-1450°F).

Contaminated oil 2 is fed through line 51 to the reaction chamber 50 of the rotating vessel 30. If liquid water is fed to the reaction chamber 50, it will flash and can upset the sub-atmospheric pressure balance. Preheating the oil 2 via exchanger 21 vaporizes water to steam and aids in conservation of heat. Small amounts of water (say less than about 1 wt.%) present in the feed oil 2 may not require preheating.

As the vessel 30 rotates, the coarse solids form a bed 55 which continuously brings the bed's contents into contact with the vessel's side walls and fins 54, scouring the contacted surfaces. The coarse solids absorb heat as they contact the vessel 30.

In a first embodiment, the feed oil 2 is directed to contact the reactor vessel cylindrical wall just before it rotates under the bed 55. The thermal mass of the vessel 30 provides sufficient heating load to substantially instantaneously vaporize and pyrolyze the oil. Hydrocarbon vapour 4 is produced and a solid coke byproduct 5 forms on the surfaces of the cylindrical walls of the vessel 30 and the fins 54.

Contaminants, such as metals and solids, remain substantially associated with the coke.

In a second embodiment, the oil is directed to contact the bed 55 which is maintained at pyrolysis temperatures through conductive heat transfer with the wall. The bed 55 is required to provide the thermal load to pyrolyze the oil. The wall of the vessel 30 is maintained at higher temperature than in the first embodiment as required to maintain sufficient temperature of the granular solids in the bed 55.

In both embodiments, the bed of granular solids scour the vessel walls and fins. The contaminant-rich coke and solids, which may have been associated with the feed oil, are scoured and thereby comminuted into fine solids which are free of the walls and the coarse granular solids.

Produced vapour 4 is extracted through the vapour pipe 53. The velocity of the vapour exiting the reactor vessel will elutriate some of the fine solids 5. The elutriated fine solids 5 exit the vapour pipe 53 and are passed through the cyclone 10 for separation of the solids 5 from the vapour stream 4.

As described above, the vapour stream 4 is passed through the condensation system 6, resulting in a liquid product 7 and a non-condensible off-gas stream 23. The liquid product 7 is sufficiently free of contaminants so as to be acceptable as a refinery feedstock. The off-gases 23 may be flared or be recycled to fuel the heating chamber burners 38.

The performance of the system is illustrated in the following example:

### EXAMPLE I

A cylindrical reactor vessel 30, 3.0m (10 feet) in diameter and 2.4m (8 feet) in length, was constructed of 12.7mm (1/2") thick stainless steel. A plurality of 101.6mm (4") tall, 12.7mm (1/2") thick fins 54 were installed, at 203.2mm (8") spacings. Two 1.2m (4 foot) diameter cylinders formed the first and second ends 31, 32. A riding ring 43 was located on each end cylinder and was rotatably supported on solid rubber rollers mounted on walking beams. A sprocket at the extreme outboard end of the first end cylinder and chain drive enabled rotation of the vessel.

The chute 56 comprised a 203.2mm (8") by 101.6mm (4") rectangular section first portion 57 and a 101.6mm (4") diameter pipe spiral second portion 58. The chute encompassed about 330° of rotation.

In a first test, the vessel was charged with 3856kg (8500 pounds) of inert ceramic balls available under the trade mark Denstone 2000, from Norton Chemical Process Products Corp, Akron, OH. As seen in Figure 3, this produced a deep bed, the chord of which was about 120°. The vessel was rotated at 3 to 4 rpm. The feed oil was directed to be distributed along the rolling bed.

Two burners 38 provided about 586200W (two million BTU/hr) for maintaining the heating chamber 3 at about 749°C (1380°F). The resulting heat transfer through the vessel wall raised the temperature of the ceramic balls to about 429°C (805°F).

29.4m³ per day (185 barrels per day) of 28° API contaminated lube oil was preheated to 249°C (480°F) before discharging it into the reactor 1. The oil contained about 0.6% water. The reactor was maintained at a slight vacuum of -25.4 to -50.8mm (-1 to -2 inches) of water column.

Vapour was extracted from the reaction chamber 50 and condensed to produce 27.8m³ per day (175 bbl/day) of 32° API product oil. The product oil was primarily quencher oil (95 to 98%) With a small contribution (2 to 5%) from the overhead drum oil. Vapour scrubber bottom oil was recycled to the reactor 1 at about 2.9m³ per day (18.5 bbl/day) (note that the solids fraction for this test was about 0.5% and is expected to be higher in other tests). The total production of non-condensible off-gases was 1912 kg/day. A further 147 kg/day of water was separated and produced from the condensation system.

Coke, containing contaminants, was produced at rates of 445kg/day. In summary:

**TABLE 1**

| | | | |
|---|---|---|---|
| Feed Rate | 29.4m³/day | 185 bbl/day | 28° API |
| Scrubber recycle | 29.4m³/day | 18.5 bbl/day | (<0.5% solids) |
| Product oil | 27.8m³/day | 175 bbl/day | 32° API |
| | | | |
| off-gas | | 1912 kg/day | |
| water | | 147 kg/day | |
| | | | |
| coke | | 445 kg/day | |

An analysis of the feed oil and the product oil confirmed a 99.84% removal of metals. This was achieved with only a 5.4% reduction in the original volume of feed oil, demonstrating little degradation of the feed oil. The resulting oil was slightly lighter product, having reduced its gravity from 28 to 32 API. Total halides were also reduced by 80%. A more detailed analysis is shown in Table 2.

**TABLE 2**

| Parameter | Feed Oil ug/g | Quencher Oil ug/g | Scrubber Oil ug/g | Coke ug/g |
|---|---|---|---|---|
| Aluminum | 9.4 | 0 | 4.1 | 1100 |
| Barium | 5.6 | 0 | 2.1 | 230 |
| Beryllium | 0 | 0 | 0 | 0 |
| Calcium | 870 | 0 | 95 | 51700 |
| Cadmium | 0.7 | 0 | 0.2 | 41 |
| Cobalt | 0.04 | 0 | 0.04 | 26 |
| Chromium | 1.8 | 0 | 0.29 | 130 |
| Copper | 46 | 0.02 | 5.7 | 2400 |
| Iron | 120 | 0.12 | 21 | 8400 |
| Lead | 61 | 0 | 27 | 3000 |
| Magnesium | 390 | 0 | 45 | 23700 |
| Manganese | 68 | 0.02 | 8.8 | 4000 |
| Molybdenum | 12 | 0 | 1.5 | 720 |
| Nickel | 0.95 | 0 | 0.34 | 110 |
| Potassium | 130 | 0 | 14 | 4000 |
| Silver | 0 | 0 | 0 | 0 |
| Sodium | 380 | 1.9 | 51 | 21000 |
| Strontium | 1.6 | 0 | 0.23 | 97 |
| Titanium | 0.72 | 0 | 0.32 | 69 |
| Vanadium | 0 | 0 | 0 | 0 |
| Zinc | 880 | 0.27 | 170 | 51400 |
| Zirconium | 0.02 | 0 | 0 | 3 |
| Boron | 11 | 1.1 | 0.78 | 130 |
| Phosphorus | 820 | 2.8 | 160 | 50800 |
| | | | | |
| Total Metals | 3808.8 | 6.2 | | |
| | | | | |
| Halides | 490 | 98.5 | | |

Assuming no metals reported to the overhead oil, the reduction of metals from the feed oil to the product oil was determined to be (3808.8-6.2)/3808.8 = 99.8%. The metals reported substantially to the coke.

The reduction in halides was found to be (490-98.5)/490=80%.

The ceramic balls were not entirely successful in scouring all of the coke from the reactor vessel walls. Thus, most of the fine coke was produced via elutriation and not through the spiral chute whose screen became blinded by coke accumulation.

### EXAMPLE II

In a second test run performed on the same equipment, the ceramic balls were replaced with a charge of cylindrical, 25.4 to 50.8mm (1 to 2") diameter, 12.7mm (1/2") thick spring steel punchings or chips. Also shown in Figure 3, about 1497kg (3300 pounds) of chips formed a shallow bed level in the vessel having a bed chord angle of about 75° .

The feed oil was directed to impinge directly upon the reactor vessel wall. The thermal load to vaporize the oil was provided by the wall itself and not the steel chips. Thus, the wall did not need to conduct a large amount of heat to the chips through conduction and the wall temperature was correspondingly lower.

The steel chips successfully scoured coke from the vessel walls, sufficient to prevent blinding of the chute's screen and permit sustainable extraction of fine coke from the reaction zone as it was produced.

A comparison of the process temperature conditions in both the ceramic ball and steel chip runs are as follows, presented in Table 3 (rounded to the nearest 2.8°C (5°F)).

**TABLE 3**

| (°F) [(°)] | | |
|---|---|---|
| | Balls EXAMPLE I | Chips EXAMPLE II |
| Reactor Bed | 805 [429] | 840 [449] |
| Reactor Vessel Wall | 1290 [699] | 930 [499] |
| Heating Chamber | 1380 [749] | 1020 [549] |
| Feed Oil | 480 [249] | 480 [249] |
| Vapour Scrubber | 700 [371] | 700 [371] |
| Quencher | 465 [241] | 465 [241] |
| Overhead Drum | 85 [29] | 85 [29] |

The above process embodies the following advantages:
● it is a continuous process with continuous removal of coke containing contaminants;
● removal of contaminants is achieved with minimal degradation of the feed oil;
● there is a minimal requirement for materials handling equipment, comprising only of a rotating vessel, a screw conveyor and a cyclone;
● avoiding the use of consumables; and
● simplicity of operation.

## Claims

1. Pyrolyzing apparatus for removing contaminants from oil (2), comprising:
a rotatable vessel (30) formed by a cylindrical side wall and end walls (35, 36), the end walls (35, 36) being connected with first and second end cylinders (33, 34) having a smaller diameter than the side wall, the vessel forming a single internal reaction chamber (50) and having an outer surface and a longitudinal axis, the end cylinders (33, 34) being positioned along the longitudinal axis;
an outer housing (3a) surrounding the vessel and forming an annular space (37) therebetween, the housing (3a) having rotary seals (41) engaging the end cylinders (33, 34);
non-ablating, granular, coarse solids forming a bed (55) within the reaction chamber (50);
burner means (38), connected with the annular space (37), for heating the outer surface of the vessel (30) to heat the vessel side wall, the bed and the reaction chamber by conduction, to cause pyrolysis of oil in the reaction chamber;
the housing having a flue stack (40) for venting combustion gas (39) from the annular space (37);
a feed-line (51) for feeding contaminated oil into the reaction chamber, the reaction chamber being arranged such that the oil will vaporize and pyrolyze to form hydrocarbon vapours and coke and contaminants concentrate in the coke and such that the bed (55) of coarse solids acts to scour the coke deposits and comminutes the coke to form fine particles;
first means (63, 64) for removing fine solids from the reaction chamber through the second end cylinder (34);
second means (56) for separating fine solids from the coarse solids adjacent the vessel side wall and conveying the separated fine solids to the first means (63) for removal from the vessel (30) as a separate solids stream;
third means (53) for removing hydrocarbon vapours from the reaction chamber through an end cylinder (33, 34) as a separate vapour stream containing fine solids; and
fourth means (6), connected with the third means (53), comprising a vapour condensation system for condensing hydrocarbons from the vapour stream.

2. The apparatus as set forth in claim 1 wherein:
the third means (53) is a vapour pipe which extends along the longitudinal axis of the vessel (30) and projects through the second end cylinder.

3. The apparatus as set forth in claim 2 wherein the first means (63, 64) extends through the vapour pipe.

4. The apparatus as set forth in claim 1, 2 or 3 wherein the second means (56) comprises a soiral chute (57, 58) having a screened inlet (61) adjacent the side wall of the vessel, for separating fine coke particles from the coarse bed solids, and an outlet discharging into the first means (63, 64).

## Patentansprüche

1. Pyrolysevorrichtung zum Entfemen von Verunreinigungen aus Öl (2), die umfasst:
einen drehbaren Behälter (30), der durch eine zylindrische Seitenwand und Stirnwände (35, 36) gebildet wird, wobei die Stirnwände (35, 36) mit einem ersten und einem zweiten Stimseitenzylinder (33, 34) verbunden sind, die einen kleineren Durchmesser haben als die Seitenwand, und der Behälter eine einzelne innere Reaktionskammer (50) bildet und eine Außenfläche sowie eine Längsachse hat, wobei die Stimseitenzylinder (33, 34) entlang der Längsachse angeordnet sind;
ein äußeres Gehäuse (3a), das den Behälter umgibt und einen ringförmigen Raum (37) dazwischen bildet, wobei das Gehäuse (3a) Drehdichtungen (41) aufweist, die mit den Stimseitenzylindem (33, 34) in Kontakt sind;
nicht ablative, kömige, grobe Feststoffe, die ein Bett (55) in der Reaktionskammer (50) bilden;
eine Brennereinrichtung (38), die mit dem ringförmigen Raum (37) verbunden ist, um die Außenfläche des Behälters (30) zu erhitzen und die Seitenwand des Behälters, das Bett sowie die Reaktionskammer durch Leitung zu erwärmen und so Pyrolyse des Öls in der Reaktionskammer zu verursachen;
wobei das Gehäuse einen Rauchabzug (40) zum Ablassen von Verbrennungsgas (39) aus dem ringförmigen Raum (37) aufweist;
eine Zuführleitung (51) zum Zuführen von verunreinigtem Öl in die Reaktionskammer, wobei die Reaktionskammer so eingerichtet ist, dass das Öl verdampft und pyrolysiert, so dass Kohlenwasserstoffdämpfe und Koks entstehen und sich Verunreinigungen in dem Koks konzentrieren, und so, dass das Bett (55) aus groben Feststoffen bewirkt, dass die Koksablagerungen abgescheuert werden und der Koks zerkleinert wird, so dass feine Teilchen entstehen;
eine erste Einrichtung (63, 64) zum Entfemen feiner Feststoffe aus der Reaktionskammer über den zweiten Stirnseitenzylinder (34);
eine zweite Einrichtung (56) zum Trennen feiner Feststoffe von den groben Feststoffen an die Behälter-Seitenwand angrenzend und zum Befördem der abgetrennten feinen Feststoffe zu der ersten Einrichtung (63) zur Entfernung aus dem Behälter (30) als ein separater Feststoffstrom;
eine dritte Einrichtung (53) zum Entfernen von Kohlenwasserstoffdämpfen aus der Reaktionskammer über einen Stirnseitenzylinder (33, 34) als einen separaten Dampfstrom, der feine Feststoffe enthält; und
eine vierte Einrichtung (6), die mit der dritten Einrichtung (53) verbunden ist und ein Dampfkondensationssystem zum Kondensieren von Kohlenwasserstoffen aus dem Dampfstrom umfasst.

2. Vorrichtung nach Anspruch 1, wobei:
die dritte Einrichtung (53) ein Dampfrohr ist, das sich entlang der Längsachse des Behälters (30) erstreckt und über den zweiten Stirnseitenzylinder vorsteht.

3. Vorrichtung nach Anspruch 2, wobei die erste Einrichtung (63, 64) sich durch das Dampfrohr erstreckt.

4. Vorrichtung nach Anspruch 1, 2 oder 3, wobei die zweite Einrichtung (56) eine Wendelrutsche (57, 58) mit einem Siebeinlass (61) an die Seitenwand des Behälters angrenzend, um feine Koksteilchen von den groben Bett-Feststoffen zu trennen, sowie einen Auslass umfasst, der in die erste Einrichtung (63, 64) austritt.

## Revendications

1. Appareil de pyrolyse pour décontaminer une huile (2), comprenant :
un récipient rotatif (30) formé par une paroi latérale cylindrique et des parois d'extrémité (35, 36), les parois d'extrémité (35, 36) étant reliées à des premier et second cylindres d'extrémité (33, 34) ayant un diamètre plus petit que celui de la paroi latérale, le récipient formant une seule chambre de réaction interne (50) et comportant une surface extérieure et un axe longitudinal, les cylindres d'extrémité (33, 34) étant positionnés le long de l'axe longitudinal ;
un logement extérieur (3a) entourant le récipient et formant un espace annulaire (37) avec celui-ci, le logement (3a) comportant des joints rotatifs (41) en contact avec les cylindres d'extrémité (33, 34) ;
des matières solides grossières, granulaires et non érodables formant un lit (55) à l'intérieur de la chambre de réaction (50) ;
des moyens formant brûleur (38) reliés à l'espace annulaire (37) et destinés à chauffer la surface extérieure du récipient (30) pour chauffer par conduction la paroi latérale de celui-ci, le lit et la chambre de réaction, afin de provoquer une pyrolyse de l'huile dans la chambre de réaction ;
le logement comportant un conduit de cheminée (40) pour évacuer des gaz de combustion (39) hors de l'espace annulaire (37) ;
une conduite d'amenée (51) pour amener de l'huile contaminée à l'intérieur de la chambre de réaction, la chambre de réaction étant conçue pour provoquer une vaporisation et une pyrolyse de l'huile afin de former des vapeurs d'hydrocarbures et du coke, et une concentration de matières contaminante dans le coke, et pour que le lit (55) de matières solides grossières agisse pour éroder les dépôts de coke et réduise celui-ci en poudre pour former des particules fines;
des premiers moyens (63, 64) pour évacuer des matières solides fines hors de la chambre de réaction à travers le second cylindre d'extrémité (34) ;
des seconds moyens (56) pour séparer des matières solides fines des matières solides grossières adjacentes à la paroi latérale du récipient et acheminer les matières solides fines séparées jusqu'aux premiers moyens (63) afin de les évacuer hors du récipient (30) sous la forme d'un courant de matières solides distinct ;
des troisièmes moyens (53) pour évacuer des vapeurs d'hydrocarbures hors de la chambre de réaction à travers un cylindre d'extrémité (33, 34) sous la forme d'un jet de vapeur distinct contenant des matières solides fines ; et
des quatrièmes moyens (6) reliés aux troisièmes moyens (53), comprenant un système de condensation de vapeur pour condenser des hydrocarbures à partir du jet de vapeur.

2. Appareil selon la revendication 1, dans lequel :
les troisièmes moyens (53) constituent un tube de vapeur qui s'étend le long de l'axe longitudinal du récipient (30) et fait saillie à travers le second cylindre d'extrémité.

3. Appareil selon la revendication 2, dans lequel les premiers moyens (63, 64) s'étendent à travers le tube de vapeur.

4. Appareil selon la revendication 1, 2 ou 3, dans lequel les seconds moyens (56) comprennent une goulotte hélicoïdale (57, 58) comportant une entrée grillagée (61) adjacente à la paroi latérale du récipient, pour séparer les particules de coke fines des matières solides grossières du lit, et une sortie débouchant à l'intérieur des premiers moyens (63, 64).
